# EUROPÄISCHE PATENTSCHRIFT

(11) **EP 1 314 585 B1**
(45) Veröffentlichungstag und Bekanntmachung des Hinweises auf die Patenterteilung: **29.11.2006**
(21) Anmeldenummer: 02019203.5
(22) Anmeldetag: 27.08.2002
(51) Int. Cl.: B60G 11/12

(54) **Blattgefederte Hinterachsaufhängung für Fahrzeuge**
Leaf sprung rear axle suspension for vehicles
Suspension à ressort à lame d'essieu arrière pour vehicule

(30) Priorität: 24.11.2001 DE 10157712
(43) Veröffentlichungstag der Anmeldung: 28.05.2003
(73) Patentinhaber: DaimlerChrysler AG, 70567 Stuttgart (DE)
(72) Erfinder: Mosler, Christian, 70374 Stuttgart (DE)

(56) Entgegenhaltungen:
- EP-A- 0 493 731
- DE-A- 3 637 663
- DE-A- 4 401 776
- FR-A- 2 520 072
- FR-A- 2 564 785
- FR-A- 2 717 236
- GB-A- 2 008 714
- GB-A- 2 033 533
- GB-A- 2 211 473
- US-A- 3 924 873
- US-A- 6 079 723

## Beschreibung

Die Erfindung betrifft eine blattgefederte Hinterachsaufhängung für Fahrzeuge, insbesondere leichte Nutzfahrzeuge, gemäß dem Oberbegriff des Anspruches 1.

Aus dem Buch von Jörnsen Reimpell, Fahrwerkstechnik 1, Vogel-Verlag, Würzburg, 1970, Seite 100 sind Hinterachsaufhängungen für Fahrzeuge bekannt, bei denen im Hinblick auf ein untersteuernd mitlenkendes Verhalten bei Kurvenfahrt der Achskörper über, bezogen auf die Fahrtrichtung, beiderseits des Achskörpers aufbauseitig angelenkte Längsblattfedern geführt wird, die sich von hinten oben schräg nach vorne unten erstrecken. Es lassen sich so die unterschiedlichen Federwege - Einfedern am kurvenäußeren Rad, Ausfedern am kurveninneren Rad - in Längsverschiebungen des Achskörpers umsetzen, durch die dieser kurvenaußen nach vorne und kurveninnen nach hinten bewegt wird, so dass sich eine Schrägstellung zur Fahrtrichtung ergibt, die, bezogen auf die Hinterachse, zum Einlenken in die Kurve und damit zu einem untersteuernden Verhalten führt. Gebunden ist eine derartige Funktion an Aufbaubewegungen, weswegen man in diesem Zusammenhang von einer Wanklenkung spricht, die, auf Grund der Abhängigkeit von Aufbaubewegungen, verhältnismäßig träge ist, insbesondere aber auch bei anderen ungleichseitigen Federbewegungen unerwünschte Lenkeffekte zur Folge hat. Daneben müssen für eine derartige, höhenversetzte Lage der vorderen und der hinteren Anlenkungen der Blattfedern die baulichen Voraussetzungen gegeben sein, bzw. gegebenenfalls geschaffen werden, mit entsprechenden Auswirkungen auf die sonstige Konzeption des Fahrzeuges.

Die in die frontseitigen Federaugen der Längsblattfedern einzusetzenden elastischen Lager sind üblicherweise als elastische, einen Innenmantel und einen Außenmantel aufweisende Lagerbuchsen ausgebildet, die in das Federauge eingesetzt oder eingepresst werden und die im Hinblick auf eine akustische Entkopplung bei exakter Achsführung üblicherweise radial relativ weich und axial, d. h. in Fahrzeugquerrichtung relativ hart ausgebildet sind (DE 40 42 201 C1).

Zur Erzielung seitenkraftabhängiger Untersteuerungseffekte ist es weiterhin für Radaufhängungen bekannt, so beispielsweise aus der DE-OS 1 780 209, die jeweiligen Radführungsglieder über einen gemeinsamen Achsträger, häufig als Fahrschemel bezeichnet, gegenüber dem Aufbau zu befestigen, und diese Befestigung des Achsträgers über elastische Elemente vorzunehmen, die ihrerseits so gestaltet und/oder angeordnet sind, dass sich in Bezug auf Seitenkräfte Schwenkbewegungen um einen hinter der Achsmitte liegenden Drehpol ergeben. Unter Komfortgesichtspunkten, auch unter Gesichtspunkten der besseren Krafteinleitung in den Aufbau und/oder der besseren Positionierbarkeit der aufbauseitigen Anlenkungen der Radführungsglieder, erweisen sich solche Lösungen häufig als zweckmäßig, bedingen aber zusätzlichen Aufwand.

Eine blattgefederte Hinterachsaufhängung für Fahrzeuge der eingangs genannten Art ist aus der US-A 3 924 873 bekannt, unter anderem in Ausgestaltungen, bei denen die den frontseitigen Enden der Blattfedern zugeordneten Federaugen zylindrischen Querschnitt aufweisen und elastische Lagerbuchsen aufnehmen, die aufbauseitig über die Buchsen zentral durchsetzende Befestigungsbolzen abgestützt sind. Die Buchsen sind in Richtung der Befestigungsbolzen weich, also querweich ausgebildet, und zwar bei schräg nach außen zur Längserstreckung der jeweiligen Blattfeder abgekröpftem Federauge mit entsprechend der schräg nach vorne innen verlaufender Achse des Federauges sich erstreckendem Befestigungsbolzen und diesen umschließender zylindrischer Buchse, oder bei einer Anordnung des Federauges mit senkrecht zur Längserstreckung der Blattfeder liegender Achse, entsprechender Erstreckung des Befestigungsbolzens und Ausbildung der diesen umschließenden Buchse mit Ausnehmungen, die ausgehend von den Stirnseiten der Buchse bezogen auf eine aufrechte, die Achse des Befestigungsbolzens enthaltende Ebene einander diagonal gegenüberliegen. Die jeweilige Anordnung der frontseitigen Federaugen und die Ausbildung der von diesen aufgenommenen Lagerbuchsen ermöglicht zwar, bezogen auf eine quersteife Ausbildung der rückwärtigen Abstützungen, grundsätzlich eine Drehpolbildung für die Achsaufhängung, bei der unter Seitenkrafteinfluss der durch die Polstrahlen gebildete Drehpol hinter der Achsmitte liegt, lässt hinsichtlich der Auslegung der elastischen Lager aber wenig Gestaltungsmöglichkeiten.

Aus der US-A 6 079 723 ist eine entsprechende Drehpolbildung durch die querweiche Ausbildung der frontseitigen Abstützungen der Längsblattfedern bei quersteifer Ausgestaltung deren rückwärtiger Abstützungen dadurch realisiert, dass die den frontseitigen Abstützungen zugeordneten, mit den Blattfedern über die deren Federaugen durchsetzende Buchsen und die diesen zugeordneten Befestigungsbolzen verbundenen Konsolen ihrerseits nachgiebig gegen den Aufbau abgestützt sind, und zwar vertikal über elastische Lager und in Querrichtung gegen elastische Anschläge bei zusätzlicher Abstützung über Lenkerführungen derart, dass die Konsolen unter Seitenkrafteinfluss geführt im Sinne des angestrebten untersteuernden Verhaltens der Achsaufhängung verschwenkt werden. Der Aufwand für derartige Systeme ist erheblich.

Der Erfindung liegt die Aufgabe zugrunde, eine blattgefederte Hinterachsaufhängung für Fahrzeuge, insbesondere für leichte Nutzfahrzeuge unter Beibehalt der solchen Lösungen innewohnenden Vorteile, insbesondere auch ökonomischen Vorteile im Hinblick auf ein seitenkraftabhängiges Untersteuerungsverhalten und dadurch erreichbare Fahrverhaltensverbesserungen weiterzubilden, ohne die Blattfedern als solche verändern zu müssen, sodass die erfindungsgemäße Lösung auch für Nachrüstungen geeignet ist.

Erreicht wird dies mit den Merkmalen des Anspruches 1, wobei die erfindungsgemäße Lösung keine weiteren Eingriffe in das bewährte Baukonzept blattgefederter Hinterachsaufhängungen für angetriebene oder auch nicht angetriebene Achsen verlangt und sich insbesondere auch in die bei leichten Nutzfahrzeugen gegebenen Baukonzepte vorteilhaft einbeziehen lässt. Insbesondere lässt sich die Erfindung auch bei herkömmlichen Blattfederkonstruktionen realisieren, ohne in die Gestaltung weitergehend eingreifen zu müssen, insbesondere ohne Veränderungen an den Blattfedern vornehmen zu müssen.

Durch die erfindungsgemäße Ausgestaltung wird, bei ovaler Ausbildung des jeweiligen Federauges und Erstreckung von dessen langer Achse in Längsrichtung der Feder, im Sinne der angestrebten Untersteuerungsfunktion für eine zur Querrichtung geneigte, zum auf den Drehpol ausgerichteten Polstrahl senkrechte elastische Verschiebbarkeit relativ zu der der Abstützung zugehörigen Konsole sowie eine Elastizität in Hochrichtung ermöglicht, und zwar bei im Wesentlichen gleicher Stärke der elastischen, hülsenförmigen Buchse des jeweiligen elastischen Lagers, so dass sich auch keine größeren Raumerfordernisse als bei vergleichbaren bekannten Konstruktionen ergeben. Hierzu wird die hülsenförmige elastische Buchse als, entsprechend dem Federauge, leicht ovalen Ringkörper auszugestaltet, und zwar bei zur Achse des Federauges geneigter Achse, wobei der Innenmantel durch einen Lagerkern gebildet ist, der als zur hülsenförmigen Buchse gleich geneigter, schiefer Zylinder ausgebildet ist, ungeachtet der zur Achse des Federauges parallel liegenden, insbesondere konzentrischen Buchsenbohrung, die die Aufnahmebohrung für den Befestigungsbolzen bildet. Die Aufnahmebohrung liegt im Bereich stirnseitiger, über die seitlichen Begrenzungen des Lagers vorstehender Ansätze der Buchse, wobei über diese Ansätze die seitliche Abstützung gegen die Lagerkonsole erfolgt, so dass in einfacher Weise, in Zuordnung zu entsprechenden, konsolenseitigen und zur Achse versetzten Vorsprüngen eine einfache Montagekontrolle möglich ist.

Der Außenmantel des Lagers ist entsprechend der Kontur des Federauges ein im Querschnitt längsovaler Ringkörper mit zur Lagerachse, die mit der Augenachse zusammenfällt, parallelen Ringwänden, so dass sich auf Grund der zur Augen- und Lagerachse geneigten Lage der hülsenförmigen Buchse in Querrichtung keilförmige, und in Umfangsrichtung sichelförmige Freiräume zwischen der Buchse und dem Außenmantel ergeben, die einander entgegengerichtet sind und die mit entsprechenden Einlagen aufgefüllt sind. Diese Einlagen sind als Führungen zweckmäßigerweise hart ausgebildet und beispielsweise durch am Außenmantel angespritzte Kunststoffkeile gebildet, so dass sich die angestrebten Untersteuerungseffekte ohne wesentliche Zusatzkosten durch entsprechende Modifikation der elastischen Lager erreichen lassen, und dies bei üblicher Ausgestaltung der Federaugen der Blattfedern, so dass in Verbindung mit der Erfindung Federn als Gleichteile, auch in Verbindung mit anderen Lagerkonstruktionen, für gleiche Fahrzeuge zu verwenden sind.

Möglichen Längsschwingungen kann in weiterer erfindungsgemäßer Ausgestaltung vorteilhaft dadurch vorgebeugt werden, dass die rückwärtige Abstützung im Hinblick auf Längsschwingungen dämpfend ausgebildet wird, was sich in einfacher Weise durch eine dämpfende Gleitlagerung erreichen lässt. Diese kann über Ausgleichslaschen realisiert werden, die beispielsweise gleitgelagert trocken laufend gegen den Aufbau abgestützt sind.

über entsprechende Hohlräume in den elastischen Lagerbuchsen können die geforderten Steifigkeiten ohne sonstigen Eingriff in die Abstützungen in einfacher Weise variiert und dadurch auch fahrzeugspezifisch angepasst werden

Weitere Einzelheiten und Merkmale der Erfindung ergeben sich aus den Ansprüchen. Ferner wird die Erfindung nachstehend an Hand von Ausführungsbeispielen erläutert. Es zeigen:
- Fig. 1: stark schematisiert eine Prinzipdarstellung einer blattgefederten Hinterachsaufhängung mit Veranschaulichung der erfindungsgemäßen Untersteuerungsfunktion,
- Fig. 2: den Federaugenbereich der bezogen auf die Darstellung gemäß Fig. 1 linken Längsblattfeder bei eingesetztem elastischem Lager, entsprechend dem Pfeil II in Fig. 1,
- Fig. 3: einen Schnitt gemäß Linie III-III in Fig. 2,
- Fig. 4: einen Schnitt gemäß Linie IV-IV in Fig. 2,
- Fig. 5 bis 7: den Fig. 2 bis 4 entsprechende, teils geschnittene Darstellungen der bezogen auf Fig. 1 linken Längsblattfeder bei eingesetztem elastischen Lager bei gleicher Ausbildung und richtungsunabhängiger Einsetzbarkeit der elastischen Lager, und
- Fig. 8 und 9: eine Ausgestaltung der der rückwärtigen Abstützung der Längsblattfedern zugehörigen Federausgleichslaschen in der Anbindung der Längsblattfedern zum Fahrzeugaufbau, in Fig. 8 im Schnitt.

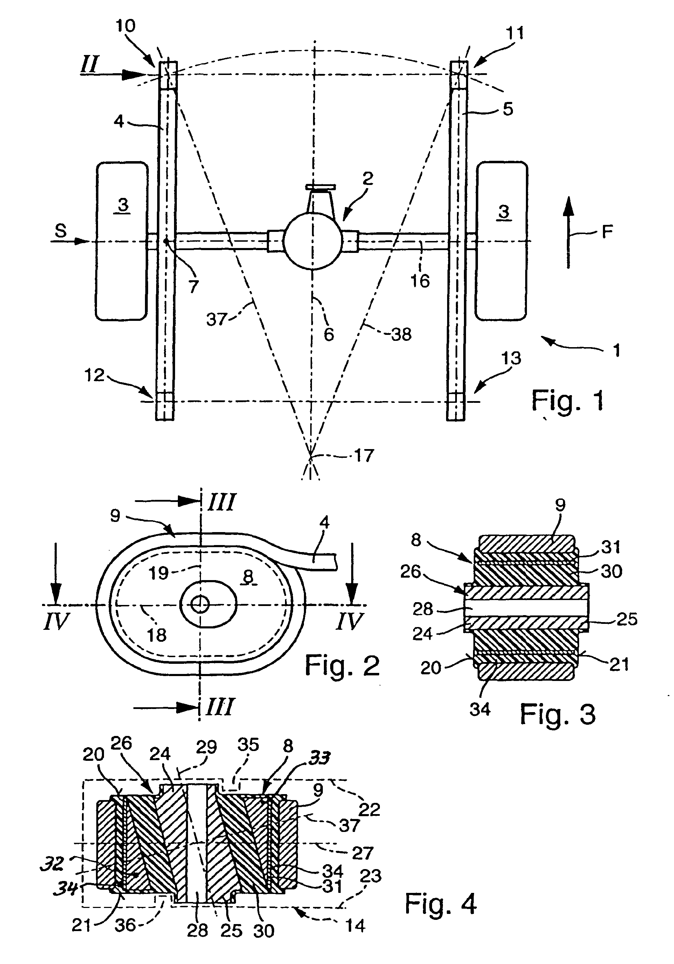

Fig. 1 zeigt schematisiert die blattgefederte Hinterachsaufhängung 1 eines ansonsten nicht dargestellten Fahrzeuges, dessen Vorwärtsfahrtrichtung durch den Pfeil F angegeben ist und dessen dem Hinterachskörper 2 zugeordnete Räder 3 angetrieben sind. Eine solche Hinterachsaufhängung 1 ist insbesondere für leichte Nutzfahrzeuge, wie Transporter, geeignet. Der Achskörper 2 ist über die Blattfedern 4 und 5 geführt, die sich nahe den Rädern 3 beiderseits der Längsmittelebene 6 des Fahrzeuges in Fahrzeuglängsrichtung erstrecken und, was nicht näher gezeigt ist, in üblicher Weise mit dem Achskörper 2 verbunden sind. Die entsprechenden Anlenkungen sind jeweils bei 7 schematisch angedeutet.

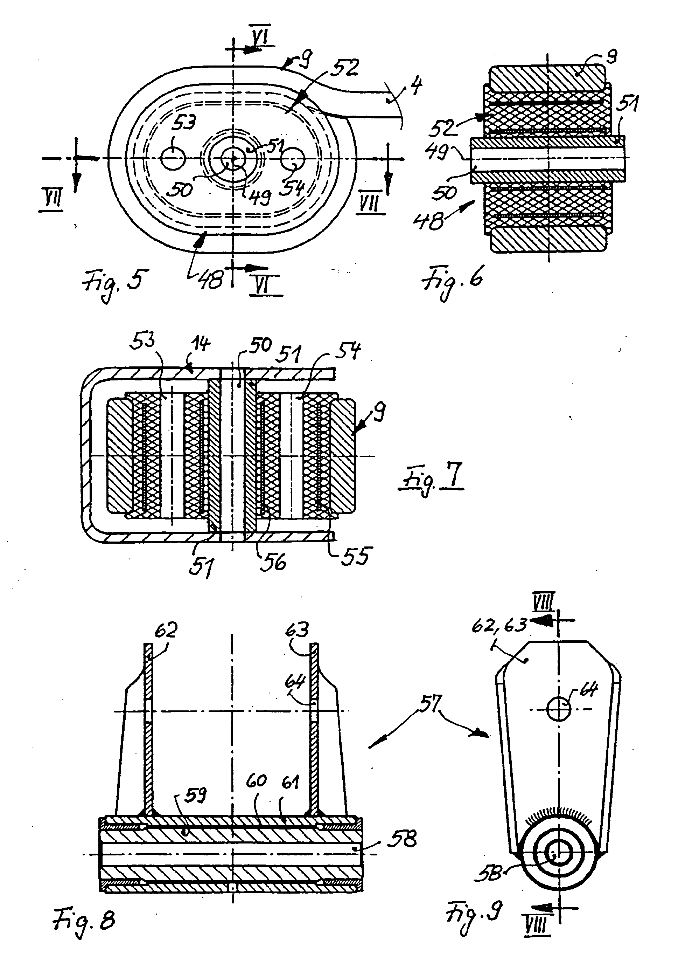

In bevorzugter Weise erfolgt die Anlenkung der Blattfedern 4, 5 am Achskörper 2 bei Ausgestaltung der elastischen Lager 8 gemäß Fig. 2 bis 4 unverschieblich, aber drehweich. Im Rahmen der Erfindung liegt diesbezüglich aber auch eine drehharte bis nahezu starre Anbindung zwischen Blattfedern 4, 5 und Achskörper 2. Bei Ausgestaltung der elastischen Lager 48 gemäß Fig. 5 bis 7 erweist sich eine unverschiebliche, aber drehweiche Ausbildung als bevorzugte Ausgestaltung.

Auch die Anlenkung und Abstützung gegen den nicht dargestellten Rahmen oder Aufbau des Fahrzeuges ist für die Blattfedern 4, 5 grundsätzlich in üblicher Weise gestaltet, und zwar für die bezogen auf die Fahrtrichtung F vorderen Anlenkungen oder Abstützungen 10, 11 über elastische Lager 8 bzw. 48, wie sie in erfindungsgemäßer Ausgestaltung in den Fig. 2 bis 4 bzw. Fig. 5 bis 7 veranschaulicht sind, und für die hinteren Abstützungen 12, 13 durch Hängelaschen, die einen Längswegausgleich gestatten.

Die elastischen Lager 8 bzw. 48 gemäß Fig. 2 bis 4 und gemäß Fig. 5 bis 7 sind mit den vorderen Enden der Blattfedern 4, 5 dadurch verbunden, dass diese Federenden zu Federaugen 9 (Fig. 2 bzw. 5) eingerollt sind, in die die elastischen Lager 8 eingesetzt sind. Aufbauseitig sind, wie in Fig. 4 bzw. 7 angedeutet, Konsolen 14 vorgesehen, gegenüber denen die Befestigung der elastischen Lager 8 bzw. 48 über Befestigungsbolzen erfolgt, die nicht gezeigt sind und die die in die Federaugen 9 eingesetzten elastischen Lager 8 bzw. 48 durchsetzen.

Die elastischen Lager 8, deren erfindungsgemäße Ausbildung im Detail nachfolgend noch näher an Hand der Fig. 2 bis 4 erläutert wird, sind für die Blattfedern 4 und 5 in deren Federaugen 9 bezogen auf die Längsmittelebene 6 spiegelbildlich angeordnet und funktional derart gestaltet, dass sie in Fahrzeugquerrichtung elastisch sind, wobei die durch die Elastizitäten festgelegte Querbeweglichkeit derart ist, dass sich unter dem Einfluss von Seitenkräften S bei Kurvenfahrt ein seitenkraftabhängiges Untersteuern ergibt, wozu die elastischen Lager 8 bezüglich ihrer Elastizitäten so ausgelegt sind, dass sich ein hinter der Achsmitte 16 liegender Drehpol 17 ergibt. Seitenkräfte S, wie sie für eine Rechtskurve in Fig. 1 angedeutet sind, haben auf Grund dieser Ausbildung, wiederum bezogen auf Fig. 1, ein Schwenken der Blattfedern 4, 5 um den Drehpol 17 in Kurvenrichtung zur Folge, verbunden mit einer entsprechenden, wenn auch kleinen Schrägstellung des Achskörpers 2, so dass sich ein Untersteuerungseffekt mit einer, wenn auch geringen Verlagerung des kurvenäußeren Rades 3 in Vorspur und des kurveninneren Rades 3 in Nachspur ergibt.

Die über die elastischen Lager 8 ermöglichte, elastisch abgestützte Querbeweglichkeit ist zweckmäßig, da sie auch die erwünschte akustische Abkopplung der Hinterachsaufhängung 1 gegen den Aufbau ermöglicht und bezogen auf herkömmliche Hinterachsaufhängungen dieser Art keinen merkbaren Zusatzaufwand bedingt.

Die Darstellung gemäß Fig. 2 zeigt ein Federauge 9, und, eingesetzt in dieses, ein elastisches Lager 8, jeweils in Seitenansicht, wobei die in dem eingerollten Federauge 9 auslaufende Blattfeder 4 bezüglich ihres weiteren Verlaufes nicht dargestellt ist. Das Federauge 9 ist im Ausführungsbeispiel, entsprechend einer bevorzugten erfindungsgemäßen Gestaltung, als Längsoval ausgebildet, bei Erstreckung der langen Achse 18 in Längsrichtung der Blattfeder 4 und der kurzen Achse 19 senkrecht hierzu in Hochrichtung. In der Breite, also senkrecht zu der von den Achsen 18 und 19 aufgespannten Hochebene, entspricht das Federauge 9 etwa der Breite der Blattfeder 4, und das elastische Lager 8 füllt das Federauge 9 aus, so dass sich, bei geringer seitlicher Überlappung durch das elastische Lager 8, im Wesentlichen ebene seitliche Begrenzungsflächen 20 und 21 ergeben, die bevorzugt parallel zu den Seitenwänden 22 und 23 der strichliert angedeuteten Konsole 14 verlaufen. Gegen die Seitenwände 22 und 23 der Konsole 14 stützt sich das elastische Lager 8 über zu den seitlichen Begrenzungsflächen 20 und 21 vorspringende Ansätze 24 und 25 des Lagerkernes 26 ab, wobei die Stirn- und Stützflächen der Ansätze 24 und 25 parallel zueinander und parallel zur von den Achsen 18 und 19 aufgespannten Ebene liegen. Diese Ebene ist in Fig. 4 mit 27 bezeichnet und wird von einer Bohrung 28 durchsetzt, die über die Breite des Lagerkernes 26 durchläuft unter Aufnahme eines nicht dargestellten Befestigungsbolzens, über den der Lagerkern 26 gegen die Seitenwände 22 und 23 der Konsole 14 verspannt wird.

Der Lagerkern 26 hat die Form eines schiefen Zylinders, dessen Zylinderachse 29, bezogen auf die die lange Achse 18 enthaltene Schnittebene IV-IV gemäß Fig. 2, zur Achse der Bohrung 28 geneigt verläuft, wobei der Neigungswinkel, bezogen auf eine Gestaltung gemäß Fig. 1, bei zum jeweiligen Polstrahl 37 bzw. 38 etwa senkrecht stehender Zylinderachse 29 in der Größenordnung von 15° liegt. Die vom Drehpol 17 zu den Abstützungen 10, 11 und den diesen zugehörigen Lagern 8 verlaufenden Polstrahlen sind mit 37 und 38 bezeichnet.

Der Lagerkern 26 bildet den Innenmantel des elastischen Lagers 9, der von einer Buchse 30 aus elastischem Material umschlossen ist, die ihrerseits an den Außenmantel des elastischen Lagers 9 angrenzt. Der Außenmantel umfasst einen der Kontur des Federauges 9 folgenden Ringkörper 31, zu dem sich auf Grund der zur Ebene 27 schrägen Erstreckung des Lagerkerns 26 - und des durch diesen gebildeten Innenmantels - bei über den Umfang im Wesentlichen gleichbleibender Dicke der elastischen Buchse 30 im Bereich der in Richtung der langen Achse 18 einander gegenüberliegenden Wandabschnitte in Umfangsrichtung sichelförmige und im Querschnitt dreiecksförmige Räume ergeben, die zur Bildung einer der Kontur des Innenmantels folgenden Kontur des Außenmantels mit entsprechenden Einlagen 32, 33 versehen ist. Diese Einlagen 32, 33 sind bevorzugt als eingespritzte Kunststoffkeile ausgebildet und weisen, bezogen auf die Darstellungsebene gemäß Fig. 4, entgegengesetzt keilförmigen Verlauf auf. Bevorzugt ist, wie aus Fig. 3 und 4 ersichtlich, der Ringkörper 31 außenseitig mit einer elastischen Auflage 34 versehen, so dass sich bevorzugt eine durch das elastische Material für die Buchse 30 und die Auflage 34 umspritzte Ausbildung des elastischen Lagers 8 ergibt, wobei über die elastische Auflage 34 auch die Fixierung des elastischen Lagers 8 im Federauge 9 bei entsprechender Einpressung erfolgen kann.

Die schiefwinklige Erstreckung des Lagerkerns 26 zur Bohrung 28, bei zum Ringkörper 31 des Außenmantels gleicher Erstreckungsrichtung desselben bringt es mit sich, dass die Ansätze 24, 25, korrespondierend zu den Einlagen 32, 33 in Bezug auf die Achse der Bohrung 28, in Richtung der Längserstreckung des Federauges 9 versetzt zueinander liegen. Dies wird im Rahmen der Erfindung zweckmäßigerweise genutzt, um über den Seitenwänden 22, 23 der Konsole 14 zugeordnete, in Richtung auf die seitlichen Begrenzungsflächen 20, 21 des elastischen Lagers 8 vorspringende und zu den Ansätzen 24, 25 überlappend liegende Stützteile, insbesondere in Form von Vorsprüngen 35, 36 sicherzustellen, dass das jeweilige elastische Lager 8 bzw. die dieses Lager 8 in ihrem Federauge 9 aufnehmende Blattfeder 4 bzw. 5 nur lagerichtig in die Konsole 14 eingeführt bzw. in dieser befestigt werden kann.

Entsprechend dem symmetrischen Versatz der Ansätze 24, 25 zur Achse der Bohrung 28 bzw. der mit dieser zusammenfallenden Achse des Federauges 9 ist es möglich, elastische Lager 8 gemäß der Erfindung spiegelbildlich versetzt in den jeweiligen Federaugen 9 der Blattfeder 4 bzw. 5 anzuordnen, so dass baugleiche Lager 8 für beide Längsblattfedern 4, 5 Verwendung finden können.

In den Fig. 5 bis 7 finden für entsprechende Teile der Abstützungen 10 und 11 gleiche Bezugszeichen Verwendung und in Verbindung mit Lagern 48 gemäß Fig. 5 bis 7 lassen sich auch funktionale Effekte erzielen, die denen bei einer Hinterachsaufhängung gemäß Fig. 1 bis 4 weitgehend entsprechen, so dass auf die diesbezüglichen Ausführungen verwiesen wird und die nachstehende Erläuterung auf unterschiedliche Baugegebenheiten beschränkt ist.

Die Lager 48 weisen eine zur Achse des Lagerauges 9 gleichgerichtete Lagerachse 49 auf, und in entsprechender Weise verläuft auch die Bohrung 50 des Lagerkernes 51, der als formsteife Hülse ausgestaltet ist. Der Lagerkern 51 ist von der elastischen Buchse 52 umschlossen, die in Anpassung an das Lagerauge 9 im Ausführungsbeispiel ein Längsoval bildet. Die an Hand der Fig. 5 bis 7 geschilderte erfindungsgemäße Lösung ist aber auch in Verbindung mit zylindrischen Lageraugen und entsprechend zylindrischen Lagern mit Kreisringform aufweisenden Buchsen zu realisieren.

Die im Ausführungsbeispiel gemäß Fig. 5 bis 7 längsovalen Buchsen 52 weisen in Richtung der langen Lagerachse 18 aneinander gegenüberliegende, hier als Bohrungen gestaltete Ausnehmungen 53, 54 auf, und der elastischen Buchse 52 sind ferner benachbart zum umschließenden Lagerauge 9 sowie zum Lagerkern 51 formsteife, insbesondere metallische Einlagen 55, 56 zugeordnet, von denen im Rahmen der Erfindung die innere Einlage 56 bevorzugt eine größere axiale Länge als die äußere Einlage 57 aufweist.

Die Lager 48 sind bezüglich ihrer Elastizitäten derart ausgelegt, dass die Längssteifigkeit, also die Steifigkeit in Richtung der Erstreckungsrichtung der Blattfedern 4 und 5 etwa dreimal größer ist als die Quersteifigkeit, wobei über die elastischen Buchsen 52 eine in Querrichtung weiche Abstützung realisiert ist, die unter dem Einfluss von bei üblicher Kurvenfahrt auftretenden Seitenkräften S zu einer Querverlagerung der Lageraugen 9 in den aufnehmenden Konsolen 14 führt, wobei die Querverlagerung unter dem Einfluss der Seitenkraft über einen kleinen Querwegbereich von etwa plus/minus 5 mm bei kleinem, nahezu flach linearem Querkraftanstieg erfolgt und im daran anschließenden Bereich eine progressive, insbesondere stark progressive Verhärtung gegeben ist, so dass einerseits eine im Hinblick auf den angestrebten Untersteuerungseffekt angestrebte Nachgiebigkeit zur Drehpolbildung erreicht ist, andererseits aber eine ausreichende Querführung auch bei extremen Seitenkräften gewährleistet ist. Die Begrenzung der Schwenkbewegung ist mit Vorteil durch eine Abstützung der Buche 52 im bezogen auf die Achse 49 radial äußeren Seitenwandbereich gegen die Konsole 14 erreicht, wobei die Buchse 52 auch durch die Gestaltung der Einlagen 55, 56 bevorzugt so ausgebildet ist, dass ihre Härte in Querrichtung mit zunehmendem Abstand zur Achse 49 abnimmt.

Die härtere Abstützung in Längsrichtung ist im Hinblick auf die zu beherrschenden Anfahr- und Bremskräfte zweckmäßig, sowie auch zur Unterdrückung von Längsschwingungen.

Sowohl im Hinblick auf die Drehpolbildung wie auch im Hinblick auf die Unterdrückung von Längsschwingungen erweist sich eine Ausgestaltung der rückwärtigen Abstützungen 12 und 13 gemäß Fig. 8 und 9 als zweckmäßig, wobei Fig. 8 und 9 eine Ausbildung der rückwärtigen Abstützung 12 bzw. 13 als Ausgleichslasche 57 zeigen, die quersteif ist, bei quersteifer Anlenkung gegenüber dem Aufbau, so dass sich bezogen auf die Quernachgiebigkeit der Lager 48 im rückwärtigen Bereich die notwendige Querabstützung ergibt, über die sich die angestrebte Drehpolbildung, insbesondere bei Lagerausbildungen gemäß Fig. 5 bis 8, realisieren lässt.

Fig. 9 zeigt eine Ausgleichslasche 57 in Seitenansicht, Fig. 8 in einem Schnitt gemäß Linie VIII-VIII in Fig. 9, wobei die Ausgleichslasche 57 als gleitgelagerte, trockenlaufende Ausgleichslasche mit Reibung arbeitet und dadurch zur Dämpfung etwaiger Längsschwingungen beiträgt. Die Ausgleichslasche 57 ist bezogen auf das dargestellte Ausführungsbeispiel über ihre untere Führung gegen den Fahrzeugaufbau abgestützt, wobei in nicht gezeigter Weise die Verschraubung über einen die Bohrung 58 der Buchse 59 durchsetzenden Bolzen erfolgt. Auf der Buchse 59 sitzt über die trockenlaufende und dadurch mit erhöhter Reibung arbeitende Gleitlagerung 60 der Mantel 61 der Ausgleichslasche 57, in deren Laschenarmen 62, 63 Bohrungen 64 für eine Verschraubung gegen ein rückwärtiges, hier nicht dargestelltes Blattfederlager erfolgt, das bevorzugt ebenfalls als elastisches Lager ausgebildet ist.

## Patentansprüche

1. Blattgefederte Hinterachsaufhängung (1) für Fahrzeuge, insbesondere leichte Nutzfahrzeuge, die, untersteuernd mitlenkend ausgebildet, einen starren Achskörper (2) sowie diesen beiderseits der Fahrzeuglängsmittelebene (6) in Fahrzeuglängsrichtung überspannende und im Bereich ihrer Enden über frontseitige und rückwärtige Abstützungen (10, 11; 12, 13) mit dem Aufbau verbundene Blattfedern (4, 5) umfasst, welche den frontseitigen Abstützungen (10, 11) zugehörige Federaugen (9) aufweisen, die jeweils ein Lager (8), das über einen senkrecht zur Querebene des Federauges (9) sich erstreckenden, das Federauge (9) durchsetzenden Befestigungsbolzen aufbauseitig abgestützt ist, mit zwischen einem Innenmantel und einem gleichachsig zum Befestigungsbolzen sich erstreckenden Außenmantel liegender, den Befestigungsbolzen umschließender und vom Federauge (9) umschlossener elastische Buchse (30) aufnehmen, wobei die frontseitigen Abstützungen (10, 11) querweich und die rückwärtigen Abstützungen (12, 13) quersteif ausgebildet sind und wobei unter Seitenkraft (S) über die frontseitigen Abstützungen (10, 11) und die rückwärtigen Abstützungen (12, 13) der Blattfedern (4, 5) ein Drehpol (17) für die Achsaufhängung bestimmt ist, der hinter der Achsmitte (16) im Bereich der rückwärtigen Abstützungen (12, 13) liegt, bei zum jeweiligen Polstrahl (37, 38) senkrechter Erstreckung der schräg nach vorne innen verlaufenden Buchse (30),
**dadurch gekennzeichnet,**
**dass** bei längsbeweglicher Halterung der rückwärtigen Abstützungen (12, 13) das jeweilige Lager (8) einen die Bohrung (28) für den Befestigungsbolzen aufnehmenden, als schiefwinkligen Zylinder mit zur Bohrungsachse winklig liegender Zylinderachse (29) ausgebildeten Lagerkern (26) aufweist, dessen Umfangsfläche den Innenmantel bildet und dass der Außenmantel durch einen der Kontur des Federauges (9) folgenden Ringkörper (31) gebildet ist, der, zur Bildung einer zum Innenmantel korrespondierenden Innenkontur, in Richtung der langen, in Längsrichtung der Blattfeder (4, 5) verlaufenden Achse (18) des ovalen Federauges (9) diagonal gegenüberliegend mit in Querrichtung korrespondierend gegenläufig keilförmigen und in Umfangsrichtung sichelförmigen Einlagen (32, 33) versehen ist.

2. Blattgefederte Hinterachsaufhängung nach Anspruch 1,
**dadurch gekennzeichnet,**
**dass** der Lagerkern (26) mit zur Bohrung (28) für den Befestigungsbolzen in Richtung der langen Achse (18) des Federauges (9) gegensinnig versetzten, seitlich vorspringenden Ansätzen (24, 25) versehen ist, denen seitens einer das Federauge (9) aufnehmenden, aufbauseitigen Konsole (14) korrespondierende Stützkeile (35, 36) derart zugeordnet sind, dass jeweils lediglich eine lagerichtige Einbringung des elastischen Lagers (8) bzw. der dieses über das Federauge (9) aufnehmenden Blattfeder (4, 5) in einer Konsole (14) möglich ist.

3. Blattgefederte Hinterachsaufhängung nach einem der vorhergehenden Ansprüche,
**dadurch gekennzeichnet,**
**dass** die frontseitigen Abstützungen (10, 11) anschließend an einen Bereich hoher Quernachgiebigkeit um die Konstruktionslage sich progressiv verhärtend ausgebildet sind.

4. Blattgefederte Hinterachsaufhängung nach Anspruch 3,
**dadurch gekennzeichnet,**
**dass** der Bereich hoher Quernachgiebigkeit durch seitliche Lageranschläge gegen den sich progressiv verhärtenden Bereich der Querabstützung abgegrenzt sind.

5. Blattgefederte Hinterachsaufhängung nach Anspruch 4,
**dadurch gekennzeichnet,**
**dass** die seitlichen Lageranschläge den Lagerkonsolen (14) zugeordnet sind, insbesondere durch die Lagerkonsolen (14) gebildet sind.

6. Blattgefederte Hinterachsaufhängung nach Anspruch 1,
**dadurch gekennzeichnet,**
**dass** die rückwärtigen Abstützungen (12, 13) in Bezug auf Längsbewegungen, insbesondere Längsschwingungen der Blattfedern (4, 5) dämpfend ausgebildet sind.

7. Blattgefederte Hinterachsaufhängung nach Anspruch 6,
**dadurch gekennzeichnet,**
**dass** die rückwärtigen Abstützungen (12, 13) der Blattfedern (4, 5) durch Ausgleichslaschen (61, 62) gebildet sind, die reibgedämpft ausgebildet sind.

8. Blattgefederte Hinterachsaufhängung nach Anspruch 7,
**dadurch gekennzeichnet,**
**dass** die Ausgleichslaschen (61, 62) als gleitgelagerte, trocken laufende Führungslaschen ausgebildet sind.

## Claims

1. Leaf-sprung, rear-axle suspension (1) for vehicles, in particular lightweight utility vehicles, which is designed to be slaved to the steering movement with understeer and comprises a rigid axle body (2) and leaf springs (4, 5) which extend over the latter on both sides of the longitudinal central plane (6) of the vehicle in the longitudinal direction of the vehicle and are connected in the region of their ends to the vehicle body by means of front-end and rear-end supports (10, 11; 12, 13), said leaf springs (4, 5) having spring eyelets (9) which are associated with the front-end supports (10, 11) and each hold a bearing (8), which is supported mounted on the vehicle body by means of an attachment bolt which extends perpendicularly with respect to the transverse plane of the spring eyelet (9), and penetrates the spring eyelet (9), by means of an elastic bushing (30) which lies between an inner jacket and an outer jacket extending along the same axis as the attachment bolt, and which elastic bushing (30) surrounds the attachment bolt and is surrounded by the spring eyelet (9), the front-end supports (10, 11) being designed so as to be transversely non-rigid and the rear-end supports (12, 13) being designed so as to be transversely rigid, and a rotational pole (17) for the axle suspension being determined under lateral force (S) via the front-end supports (10, 11) and the rear-end supports (12, 13) of the leaf springs (4, 5), said rotational pole (17) lying behind the centre (16) of the axle in the region of the rear-end supports (12, 13) when the bushing (30) which runs obliquely forwards extends perpendicularly with respect to the particular pole half line (37, 38), **characterized in that**, when the rear-end supports (12, 13) are secured in a longitudinally moveable fashion, the respective bearing (8) has a bearing core (26) which has the bore (28) for the attachment bolt and is embodied as an obliquely angled cylinder with a cylinder axis (29) which is at an angle to the bore axis, the circumferential face of said bearing core (28) forming the inner jacket, and **in that** the outer jacket is formed by an annular body (31) which follows the contour of the spring eyelet (9) and, in order to form an inner contour which corresponds to the inner jacket is provided, lying diagonally opposite in the direction of the long axis (18), running in the longitudinal direction of the leaf springs (4, 5), of the oval spring eyelet (9), with inserts (32, 33) which are correspondingly opposingly wedge shaped in the transverse direction and sickle shaped in the circumferential direction.

2. Leaf-sprung rear axle suspension according to Claim 1, **characterized in that** the bearing core (26) is provided with laterally projecting shoulders (24, 25) which are offset in opposite directions with respect to the bore (28) for the attachment bolt in the direction of the long axis (18) of the spring eyelet (9) and which are assigned corresponding support wedges (35, 36) to the side of a vehicle body-mounted bracket (14) which holds the spring eyelet (9), said support wedges (35, 36) being assigned in such a way that in each case the elastic bearing (8) or the leaf spring (4, 5) which holds the latter by means of the spring eyelet (9) can respectively only be introduced into a bracket (14) in the correct position.

3. Leaf-sprung, rear-axle suspension according to one of the preceding claims, **characterized in that** the front-end supports (10, 11) are subsequently formed on a region of high transverse resilience in a way which hardens progressively around the design position.

4. Leaf-sprung, rear-axle suspension according to Claim 3, **characterized in that** the region of high transverse resilience is bounded by lateral bearing stops against the progressively hardening region of the transverse support.

5. Leaf-sprung, rear-axle suspension according to Claim 4, **characterized in that** the lateral bearing stops are assigned to the bearing brackets (14), in particular are formed by the bearing brackets (14).

6. Leaf-sprung, rear-axle suspension according to Claim 1, **characterized in that** the rear-end supports (12, 13) are of damping design with respect to longitudinal movements, in particular longitudinal oscillations of the leaf springs (4, 5).

7. Leaf-sprung, rear-axle suspension according to Claim 6, **characterized in that** the rear-end supports (12, 13) of the leaf springs (4, 5) are formed by compensation clips (61, 62) which are of frictionally damped design.

8. Leaf-sprung, rear-axle suspension according to Claim 7, **characterized in that** the compensation clips (61, 62) are designed as slide-mounted, dry-running guide clips.

## Revendications

1. Suspension d'essieu arrière (1) sur ressort à lame pour véhicules automobiles, en particulier pour véhicules utilitaires légers, qui, configurée sous-vireuse directionnelle, comprend un corps d'essieu rigide (2) ainsi que des ressorts à lame (4, 5) recouvrant celui-ci des deux côtés du plan médian longitudinal du véhicule (6) dans le sens longitudinal du véhicule et reliés à la carrosserie dans la zone de leurs extrémités par l'intermédiaire de supports avant et arrière (10, 11 ; 12, 13), lesquels ressorts comportent des anneaux de ressorts (9) associés aux supports avant (10, 11) qui reçoivent chacun un palier (8) qui est supporté du côté de la carrosserie par un boulon de fixation s'étendant verticalement au plan transversal de l'anneau de ressort (9) traversant l'anneau de ressort (9), avec une douille (30) élastique s'étendant entre une enveloppe intérieure et une enveloppe extérieure s'étendant de manière équiaxiale par rapport au boulon de fixation, entourant le boulon de fixation, et entourée par l'anneau de ressort (9), les supports avant (10, 11) étant mous transversalement et les supports arrière (12, 13) étant rigides transversalement et un pôle de rotation (17) étant déterminé pour la suspension d'essieu avec une composante latérale (S) par l'intermédiaire des supports avant (10, 11) et des supports arrière (12, 13), lequel pôle se trouve derrière l'axe de l'essieu (16) dans la zone des supports arrière (12, 13), avec une extension verticale de la douille (30) s'étendant en biais à l'intérieur vers l'avant par rapport au faisceau de pôle respectif (37, 38), **caractérisée en ce que**, dans le cas d'une fixation mobile dans le sens longitudinal des supports arrière (12, 13), le palier correspondant (8) comporte un noyau de palier (26) recevant l'alésage (28) pour le boulon de fixation, configuré comme un cylindre à angle oblique avec un axe de cylindre (29) angulaire par rapport à l'axe d'alésage, dont la surface circonférentielle forme l'enveloppe intérieure et **en ce que** l'enveloppe extérieure est formée par un corps annulaire (31) qui suit le contour de l'anneau de ressort (9) qui, pour la formation d'un contour intérieur correspondant à l'enveloppe intérieure, en direction de l'axe long (18) s'étendant dans le sens longitudinal du ressort à lame (4, 5) de l'anneau de ressort oval (9) est muni dans le sens diagonalement opposé de garnitures (32, 33) en forme de coins correspondant en sens contraire dans le sens transversal et en forme de croissants dans le sens circonférentiel.

2. Suspension d'essieu arrière sur ressort à lame selon la revendication 1, **caractérisée en ce que** le noyau de palier (26) est muni d'épaulements (24, 25) décalés en sens contraire par rapport à l'alésage (28) pour le boulon de fixation dans le sens de l'axe long (18) de l'anneau de ressort (9), faisant saillie latéralement, auxquels des clavettes de support (35, 36) correspondantes du côté d'une console (14) placée du côté de la carrosserie recevant l'anneau de ressort (9) sont associées de telle manière qu'à chaque fois, seule l'installation en position correcte du palier élastique (8) ou du ressort à lame (4, 5) le recevant par l'intermédiaire de l'anneau de ressort (9) est possible dans une console (14).

3. Suspension d'essieu arrière sur ressort à lame selon l'une quelconque des revendications précédentes, **caractérisée en ce que** les supports avant (10, 11) se durcissent progressivement à la suite d'une zone présentant une élasticité transversale plus élevée autour de la position de construction.

4. Suspension d'essieu arrière sur ressort à lame selon la revendication 3, **caractérisée en ce que** la zone présentant une élasticité transversale plus élevée est délimitée par des butées de paliers latérales par rapport à la zone se durcissant progressivement du support transversal.

5. Suspension d'essieu arrière sur ressort à lame selon la revendication 4, **caractérisée en ce que** les butées de paliers latérales sont associées aux consoles de paliers (14), en particulier elles sont formées par les consoles de paliers (14).

6. Suspension d'essieu arrière sur ressort à lame selon la revendication 1, **caractérisée en ce que** les supports arrière (12, 13) sont configurés comme des amortisseurs par rapport aux déplacements longitudinaux, en particulier par rapport aux oscillations longitudinales des ressorts à lame (4, 5).

7. Suspension d'essieu arrière sur ressort à lame selon la revendication 6, **caractérisée en ce que** les supports arrière (12, 13) des ressorts à lame (4, 5) sont formés par des colliers compensateurs (61, 62) qui sont amortis en friction.

8. Suspension d'essieu arrière sur ressort à lame selon la revendication 7, **caractérisée en ce que** les colliers compensateurs (61, 62) sont conçus comme des colliers de guidage logés dans des paliers lisses, tournant à sec.
